# EUROPEAN PATENT APPLICATION

(11) **EP 3 722 688 A1**
(43) Date of publication of application: **14.10.2020**
(21) Application number: 18815929.7
(22) Date of filing: 15.11.2018
(51) Int. Cl.: F24F 6/12, F24F 6/00

(54) **ULTRASONIC HUMIDIFIER**

(30) Priority: 04.12.2017 JP 2017232294
(71) Applicant: Kankyo Co., Ltd., Nankoku-shi, Kochi 783-0004 (JP)
(72) Inventor: IKE, Hidetoshi, Nankoku-shi Kochi 783-0004 (JP)
(74) Representative: Mewburn Ellis LLP
(86) International application number: PCT/JP2018/042306
(87) International publication number: WO 2019/111667

(57) **Abstract**

There is disclosed an ultrasonic humidifier which can be easily disassembled and cleaned. The ultrasonic humidifier includes a tank configured to contain water to be atomized; a float unit configured to float on the water contained in the tank; an ultrasonic vibrator disposed in the float unit; and power supply means for supplying power to the ultrasonic vibrator. The power supply means includes a pair of sliding contact points disposed in the float unit and configured to be always located above the water surface of the water; and a pair of electrodes A configured to be always put in sliding contact with the pair of sliding contact points, and configured to be always located above the water surface of the water. Each of the electrodes A is disposed outside the float unit and connected to a power supply, and power from the power supply is supplied to the ultrasonic vibrator via the electrodes A and the sliding contact points.

## Description

### Technical Field

The present invention relates to an ultrasonic humidifier.

### Background Art

Conventionally, there are known various types of humidifiers utilizing ultrasonic. The principle of these humidifiers is that ultrasonic is oscillated under a water surface, and the water on the water surface is atomized. For example, patent document 1 and patent document 2 are known. In addition, there is also known a humidifier which is configured such that a float is floated in a tank, and an ultrasonic vibrator is disposed in the float (patent document 3).

### Citation List

### Patent Documents

Patent document 1: JP 2016-050686 A
Patent document 2: JP 2016-221460 A
Patent document 3: EP 2386805 A2

### Summary of Invention

### Technical Problem

In the ultrasonic humidifiers disclosed in patent document 1 and patent document 2, there is a concern that various germs propagate in the water staying in the device, and the germs together with the water are atomized and dispersed. In order to prevent the propagation of various germs, frequent cleaning is required, but there is a problem that the device is complex and it is difficult to disassemble and clean the device. In addition, the ultrasonic humidifier disclosed in patent document 3 includes a guide which guides vertical movement of the float in the water tank. Since electric power is supplied to an ultrasonic vibrator on the float via an electric line, the configuration is complex, and a work for taking the float out of the water tank is troublesome.

An object of the present invention is to provide an ultrasonic humidifier which has a simple configuration and allows easy cleaning of the ultrasonic vibrator and the inside of the water tank.

### Solution to Problem

As a result of intensive research effort, the inventor found the following and completed the present invention. A float unit, which floats on the water that is contained in a tank and is to be atomized, is provided. An ultrasonic vibrator(s) is/are disposed in the float unit, and sliding contact points are provided on the float unit. Electric power is supplied to the ultrasonic vibrator via the sliding contact points. Thereby, the configuration is made simple, and, at the time of cleaning, the float unit, as a whole, is taken out of the tank, and the float unit and tank can easily be cleaned.

That is, the present invention provides the following:
(1) An ultrasonic humidifier comprising:
   a tank configured to contain water to be atomized;
   a float unit configured to float on the water contained in the tank;
   an ultrasonic vibrator disposed in the float unit; and
   power supply means for supplying power to the ultrasonic vibrator,
   wherein the power supply means comprises:
      a pair of sliding contact points disposed in the float unit and configured to be always located above the water surface of the water; and
      a pair of electrodes A configured to be always put in sliding contact with the pair of sliding contact points, and configured to be always located above the water surface of the water, and
      each of the electrodes A is disposed outside the float unit and connected to a power supply, and power from the power supply is supplied to the ultrasonic vibrator via the electrodes A and the sliding contact points.
(2) The humidifier of (1), wherein the float unit comprises a float base plate, the float base plate comprises on the upper surface thereof a convex-shaped float member configured to apply buoyancy, and the surface of the ultrasonic vibrator is exposed to the water on the upper surface side of the float base plate.
(3) The humidifier of (2), further comprising a driving circuit provided on the lower surface side of the float base plate and configured to drive the ultrasonic vibrator.
(4) The humidifier of (1) or (3), further comprising a pair of upwardly projecting pipes provided on the peripheral edge portion of the upper surface of the float base plate, wherein each of the sliding contact points is disposed on each of the pipes in a manner to face outward.
(5) The humidifier of any one of (1) to (4), further including a base plate unit on which the tank is placed; one or more support column cases provided on the peripheral edge portion of the base plate unit, extend upward and are configured to hold the tank; and an upper cover attached to each of upper end portions of the support column cases, and located in upper opening portion of the tank.
(6) The humidifier of (5), wherein the electrodes A are disposed on the upper cover.
(7) The humidifier of (5) or (6), wherein the upper cover is disposed above the water surface of the water, and comprises a collar configured to cover a most part of the water surface of the water.
(8) The humidifier of any one of (5) to (7), wherein the base plate unit incorporates a fan, and the air flow produced by rotating the fan, passes through the support column case and the upper cover, and then reaches the space above the water surface of the water in the tank.
(9) The humidifier of any one of (1) to (3), further comprising a pair of upwardly projecting wall-shaped float members provided on the peripheral edge portion of the upper surface of the float base plate, wherein each of the sliding contact points is disposed on each of the wall-shaped float members in a manner to face outward, and each of the electrodes A is provided on the inner surface of the tank.
(10) The humidifier of (9), further comprising a housing configured to accommodate the tank, and an upper cover located in upper opening portion of the tank.
(11) The humidifier of (10), wherein the upper cover is disposed above the water surface of the water, and comprises a collar configured to cover a most part of the water surface of the water.
(12) The humidifier of (10) or (11), wherein the housing incorporates a fan in a bottom part of the housing, and the air flow produced by rotating the fan passes through the space between the inner surface of the housing and the outer surface of the tank, and then through the upper cover, and reaches the space above the water surface of the water in the tank.
(13) The humidifier of any one of (1) to (12), further including means for detecting the current flowing in the sliding contact points and measuring the time in which the current does not flow; and means for stopping driving and turning on an alarm lamp when the time reaches a prescribed time.
(14) The humidifier of any one of (1) to (13), further comprising a pair of electrodes C disposed at a position lower than the lower end portions of the electrodes A; means for measuring the current value of the current flowing between the pair of electrodes C; and means for stopping driving and turning on an alarm lamp when the measured current value is a prescribed value or more.
(15) The humidifier of any one of (1) to (14), further comprising a pair of electrodes B disposed at a position where the pair of electrodes B are immersed in the water, the pair of electrodes B being composed of an anode and a cathode and configured to precipitate metal ions included in the water.

### Advantageous Effects of Invention

In the ultrasonic humidifier of the present invention, since the float unit, in which the ultrasonic vibrator, etc. are disposed, can easily be taken out of the tank, the float unit and tank can easily be cleaned, and propagation of various germs in the water can easily be prevented.

### Brief Description of Drawings

Fig. 1 is an exploded perspective view of a humidifier according to one embodiment of the present invention.
Fig. 2 is a perspective view of the humidifier shown in Fig. 1.
Fig. 3 is a perspective view of the humidifier shown in Fig. 1, as viewed from a lateral side.
Fig. 4 is a perspective view of a float unit of the humidifier shown in Fig. 1.
Fig. 5 is a perspective view of the float unit of the humidifier shown in Fig. 1, as viewed from an obliquely downward direction.
Fig. 6 is a cross-sectional view taken along line A-A' in Fig. 4.
Fig. 7 is a cross-sectional view taken along line B-B' in Fig. 4.

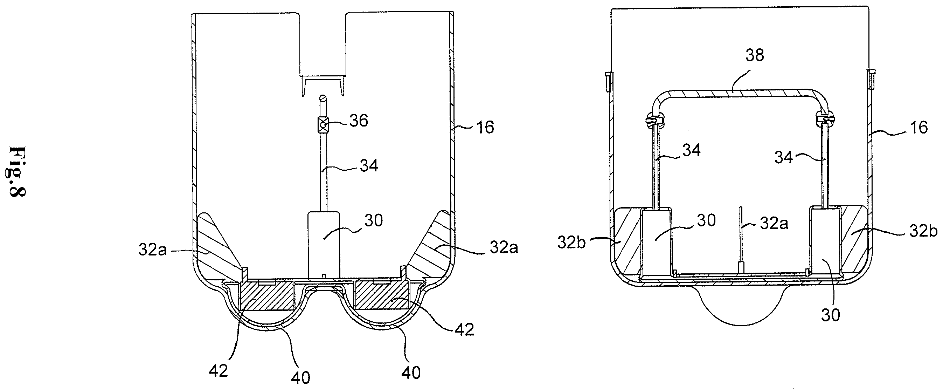

Fig. 8 is a cross-sectional view of shake-preventing plates of the humidifier shown in Fig. 1.
Fig. 9 is a cross-sectional view of a sliding contact point portion of the humidifier shown in Fig. 1.
Fig. 10 is a cross-sectional view showing a state in which a sliding contact point of the humidifier shown in Fig. 1 is put in contact with an electrode A.
Fig. 11 is a cross-sectional view of a lateral-side upper part of the humidifier shown in Fig. 1.
Fig. 12 is an exploded perspective view of a lateral-side upper part of the humidifier shown in Fig. 1.
Fig. 13 is a perspective view of an upper end portion of a support column case of the humidifier shown in Fig. 1.
Fig. 14 is an exploded perspective view of a bottom part of the humidifier shown in Fig. 1.
Fig. 15 is a cross-sectional view (an enlarged range of a cross-sectional view taken along line C-C' in Fig. 4) relating to water levels and dimensions of parts in the humidifier shown in Fig. 1.
Fig. 16 is a view showing engagement between a tank and support column cases of the humidifier shown in Fig. 1.
Fig. 17 is a view showing the state in which the tank and support column case are engaged.
Fig. 18 is a cross-sectional view (an enlarged range of the cross-sectional view taken along line C-C' in Fig. 4) of the humidifier shown in Fig. 1.
Fig. 19 is a cross-sectional view taken along line D-D' in Fig. 2.
Fig. 20 is a perspective view of an electrode unit of the humidifier shown in Fig. 1.
Fig. 21 is an explanatory view (a part of a float member in the cross-sectional view taken along line B-B' in Fig. 4) of an electrode B, which causes a potential difference in water, and an electric line in the humidifier shown in Fig. 1.
Fig. 22 is an exploded perspective view of a humidifier according to a second embodiment of the present invention, as viewed from a front upper left direction on the front side.
Fig. 23 is an exploded perspective view of the humidifier shown in Fig. 22, as viewed from a front lower left direction on the front side.
Fig. 24 is a perspective view of the float unit of the humidifier shown in Fig. 22.
Fig. 25 is a cutaway view of a sliding contact point unit provided in the float unit shown in Fig. 24.
Fig. 26 is a perspective view of the base plate unit of the humidifier shown in Fig. 22.
Fig. 27 is a perspective view showing the state in which the tank is set in the base plate unit shown in Fig. 26.
Fig. 28 is a perspective view showing the state in which the float unit is set in the tank shown in Fig. 27.
Fig. 29 is a perspective view of the humidifier shown in Fig. 22.
Fig. 30 is a view showing the state in which the float unit is in the lowest position in the cross-sectional view taken along line E-E' in Fig. 29.
Fig. 31 is a view showing the state in which the float unit is in the highest position in the cross-sectional view taken along line E-E' in Fig. 29.
Fig. 32 is a view showing the state in which the float unit is in the lowest position in the cross-sectional view taken along line F-F' in Fig. 29.
Fig. 33 is a view in which flows of air and mist are illustrated in Fig. 32.
Fig. 34 is a connection diagram showing connections between electrical parts of the humidifier shown in Fig. 22.

### Mode for Carrying out Invention

The most characteristic feature of the present invention is that an ultrasonic vibrator(s) is/are disposed in a float unit which floats on water contained in a tank and is to be atomized, and power supply means with a simple configuration is provided for supplying power to the ultrasonic vibrator provided in the float unit which vertically moves. Since the float unit can be held by the hand and can easily be taken out of the tank, the float unit and the tank can easily be disassembled and cleaned and, in turn, the propagation of various germs can be prevented. Since the ultrasonic vibrator(s) is/are driven by electric power, the power supply means for supplying power to the ultrasonic vibrator(s) is provided.

The float unit vertically moves in the tank in accordance with the variation of the water level of the water in the tank. No matter where the float unit is positioned in the tank, power is always supplied by the power supply means. The power supply means comprises at least one pair of sliding contact points disposed in the float unit, and sliding contact points which are always located above the water surface of the water, and electrodes A which are always in sliding contact with the sliding contact points, and are always located above the water surface of the water in the tank. In this case, the electrodes A are disposed outside the float unit, and are connected to a power supply, and electric power from the power supply is supplied to the ultrasonic vibrator(s) via the electrodes A and sliding contact points. Since the ultrasonic vibrator(s) is/are driven by an AC voltage of a high frequency, it is preferable that the power of the power supply be converted to AC power of a high frequency by a driving circuit, immediately before the power of the power supply is input to the ultrasonic vibrator(s). It is preferable that the input to the driving circuit via the electrodes A and sliding contact points be DC 45 V or less.

In addition, in order to achieve a high atomization efficiency per electric power, it is desired that, regardless of the position of the float unit, the distance between the ultrasonic vibrator and the water surface be set at an optimal distance (the optimal distance varies depending on the oscillation frequency and output of an ultrasonic atomization unit, and is generally 20 to 50 mm at a frequency of 0.5 to 5 MHz). In order to achieve this, in one preferable embodiment, the float unit includes a float base plate, and one or a plurality of convex-shaped float members, which apply buoyancy, are provided on the upper surface of the float base plate. In this case, the surface of the ultrasonic vibrator is exposed to water on the upper surface side of the float base plate. The float member is configured to apply to the float unit the buoyancy which floats the entirety of the float unit. If this purpose is achieved, the material of the float member is not particularly limited. The float member may be formed as a convex-shaped part including a cavity (containing air), or may be a convex-shaped part formed of a material with a low specific gravity such as foamed plastic. One or a plurality of float members are provided, and the size and number of the float members are set such that the distance between the ultrasonic vibrator and the water surface becomes an optimal distance. In addition, in order to ensure that the float unit vertically moves keeping the horizontal state in accordance with the variation of the water level, it is preferable that the float member(s) be disposed such that the center of buoyancy agrees with the center of gravity of the float unit. For example, when the float base plate is formed as a disc, this can easily be achieved by arranging structural elements disposed on the float base plate, such as the ultrasonic vibrator(s), the driving circuit(s) of the ultrasonic vibrator(s), and the float member(s), such that the center of the float base plate that is the disc agrees with the center of gravity of the float unit, and by arranging the respective structural elements such that the center of the buoyancy, which the float unit receives, agrees with the center of the float base plate.

Hereinafter, preferable embodiments of the ultrasonic humidifier of the present invention will be described with reference to the accompanying drawings.

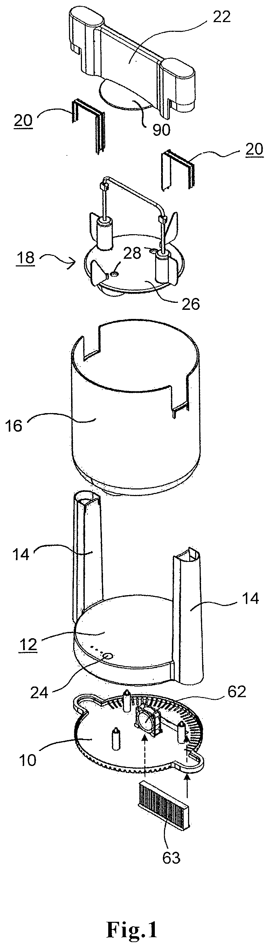

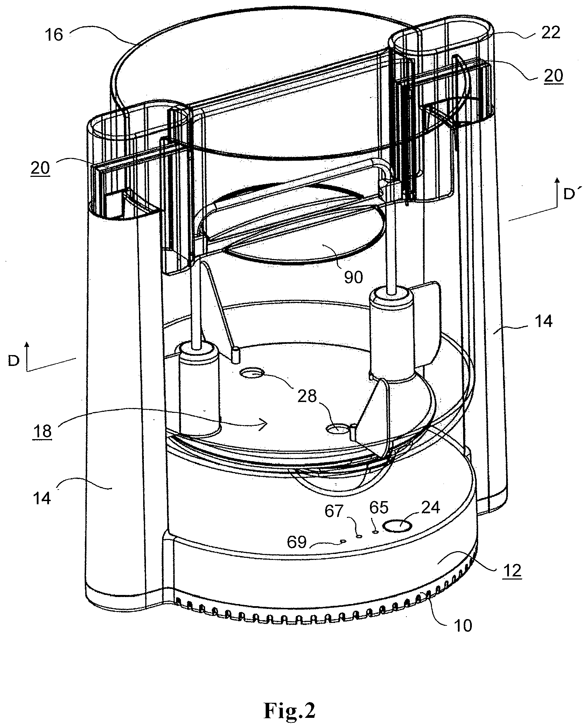

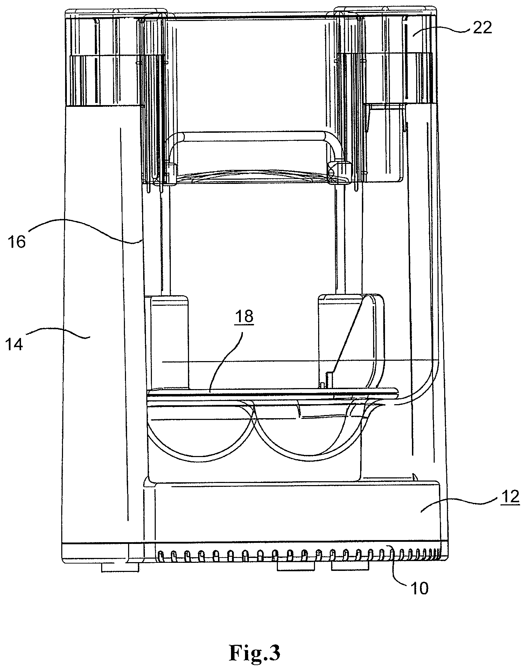

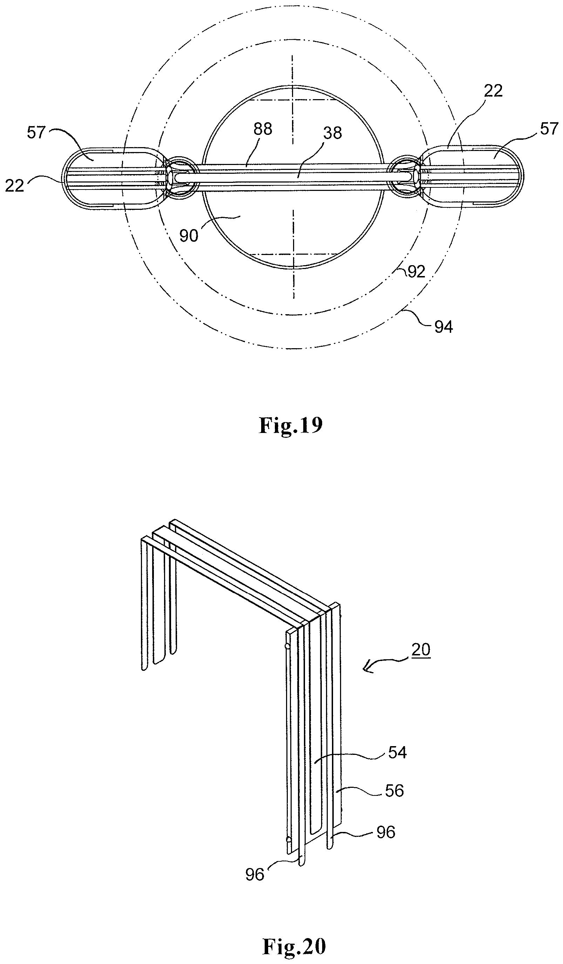

Fig. 1 is an exploded perspective view of a preferable first embodiment of the ultrasonic humidifier of the present invention. Fig. 2 is a perspective view of the embodiment, and Fig. 3 is a perspective view of the embodiment, as viewed from a lateral side. As well shown in Fig. 1 and Fig. 2, the ultrasonic humidifier of the embodiment includes, in the order from below, a bottom cover 10; a base plate unit 12; a pair of support column cases 14 each having a bottom part coupled to the base plate unit 12, and extending upward; a tank 16 which is placed on the base plate unit 12 and contains water to be atomized; a float unit 18 which floats on the water contained in the tank 16; an electrode unit 20 (Fig. 20) including an electrode A 54 and an electrode C 96 to be described later; and an upper cover 22 having both end portions engaged with upper end portions of the support column cases 14. In Fig. 2 and Fig. 3, the inside of the tank 16 is shown in a see-through manner. The base plate unit 12 is provided with a switch 24 which turns on/off the driving of the humidifier. The side on which the switch 24 is provided is the front side of the humidifier. In the description below and in the claims, the words "upward", "upper surface", "upper side", "upper end", "downward", "lower surface", "lower side", "lower end", "above and below", "inner side", "outer side", "bottom part", "lateral", "side surface", "left and right", "front surface", "rear surface", and "front and rear" have the meanings which are all defined when the humidifier is viewed from the front side, and when the side on which the bottom cover 10 is located is "lower", and the side on which the upper cover 22 is located is "upper".

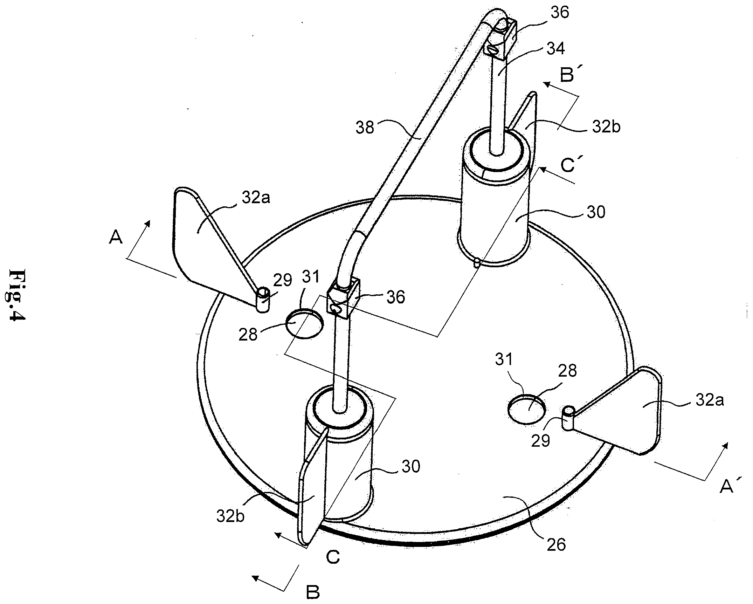

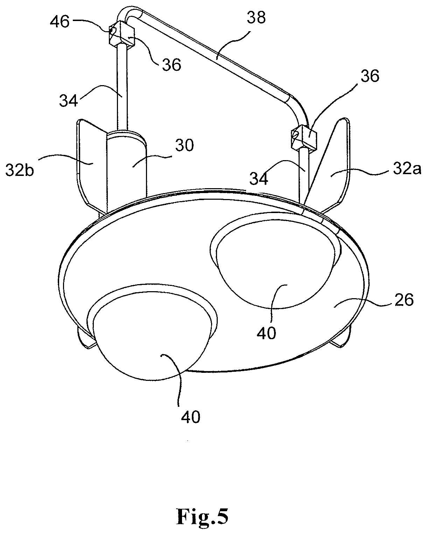

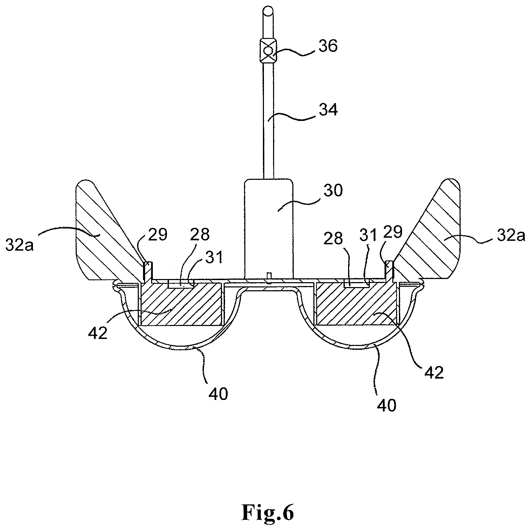

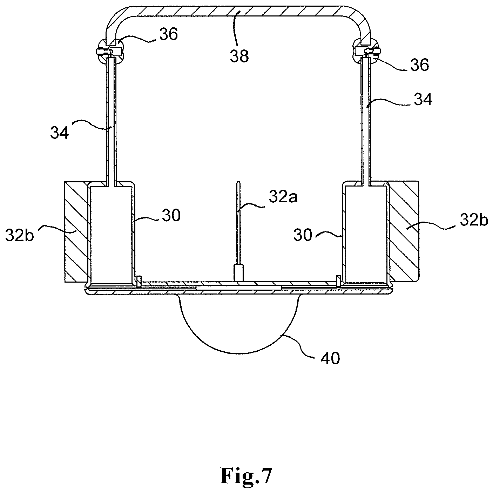

Next, the float unit 18 in this embodiment will be described. Fig. 4 is a perspective view of the float unit 18, as viewed from an obliquely upward direction. Fig. 5 is a perspective view of the float unit 18, as viewed from an obliquely downward direction. Fig. 6 is a cross-sectional view taken along line A-A' in Fig. 4, and Fig. 7 is a cross-sectional view taken along line B-B' in Fig. 4.

The float unit 18 includes a disc-shaped float base plate 26. A pair of ultrasonic vibrators 28 are disposed on the float base plate 26. The ultrasonic vibrators 28 have their surfaces exposed to water to be atomized. A pair of cylindrical float members 30 are provided on the peripheral edge portion of the float base plate 26 at such positions that the cylindrical float members 30 are opposed, with the center of the disc-shaped float base plate 26 being interposed. As well shown in Fig. 7, the float members 30 are hollow, and are principal members which apply buoyancy to the float unit 18. The number of the float members 30 is not limited to two, and may be one, or three or more, but it is preferable that the float members 30 be disposed such that the center of buoyancy agrees with the center of the disc-shaped float base plate 26. By properly setting the diameter and the number of cylindrical float members 30, the distance between each of the ultrasonic vibrators 28 and the water surface can easily be set at an optimal distance at all times.

The float base plate 26 is further provided with four shake-preventing plates 32a and 32b in total, which are shake-preventing members. The shake-preventing plates 32a are provided on peripheral edge portion of the float base plate 26 at opposed positions with the center of the disc being interposed, and the shake-preventing plates 32b are provided on outer peripheral edge portion of the respective float members 30. The shake-preventing plates 32a and 32b are provided to ensure a vertical movement in the horizontal state of the float unit 18 in accordance with a vertical movement of the water level. It is thus preferable that the distance between the outermost part of the shake-preventing plate 32a, 32b and the inner wall of the tank 16 be set to be as small as about 0.1 mm to 5 mm. In the shown embodiment, although the four shake-preventing plates in total are uniformly arranged, the number of shake-preventing plates is not limited to four, and may be, for example, two to eight. In addition, the shake-preventing plates are needless if the float unit 18 is stably vertically movable with no inclination, for example, by increasing the diameter of the float base plate 26, setting the distance between the float base plate 26 and the inner wall of the tank 16 at about 0.1 mm to 5 mm, and increasing the thickness of the outer edge portion of the float base plate 26. In this case, the outer edge portion of the float base plate 26 functions as a shake-preventing member. Besides, the shake-preventing plates are made needless by disposing each float member 30 in a manner to project up to a distance of about 0.1 mm to 5 mm from the inner wall of the tank 16. In this case, the outer edge portions of the float members 30 function as shake-preventing members.

A pipe 34, which projects upward from the top portion of each float member 30, is provided. The upper part of each pipe 34 is provided with a sliding contact point holder 36 including a sliding contact point, which will be described later in detail. Top portions of the pipes 34 (upper portions of the sliding contact point holders 36) are coupled by a bar 38, and the two pipes 34 and the bar 38 form a U shape as a whole (a U shape with orthogonal corners, i.e. a shape of a rectangle with one side missing). The bar 38 is used as a handle which is held by the hand when the float unit 18 is taken out of the tank 16, and the bar 38 is not always necessary. In this embodiment, the pipes 34 are provided on the peripheral edge portion of the float base plate 26 via the float members 30, but the pipes 34 do not need to be provided on the float members 30, and may be directly provided at other positions of the peripheral edge portion of the float base plate 26.

As shown in Fig. 5, two dome-shaped hollow convex portions 40 in total are provided on the lower surface side of the float base plate 26. As well shown in Fig. 6, a driving circuit 42 that drives the ultrasonic vibrator 28 is contained in each hollow convex portion 40. An ultrasonic atomization unit is constituted by the ultrasonic vibrator 28 and the driving circuit 42 that drives the ultrasonic vibrator 28. The ultrasonic vibrator 28 is made of piezoelectric ceramic. When a high-frequency AC voltage is applied to the ultrasonic vibrator 28, the ultrasonic vibrator 28 generates ultrasonic vibration energy by extension and contraction. The vibration energy propagates to the water surface, and raises the water surface, thus generating mist. The driving circuit 42 converts input DC power to a high-frequency AC voltage, and supplies the high-frequency AC voltage to the ultrasonic vibrator 28. Since it is not preferable that the driving circuit 42 be wetted with water, the hollow convex portion 40 is watertightly provided by, e.g. a potting seal, so that no water enters the inside of the hollow convex portion 40. If watertightness of the float base plate 26 is ensured, a potting seal is needless, and a cooling heat sink (heat radiation plate) of the driving circuit 42 may be exposed to the surface of the float base plate 26, thereby to radiate heat to the water. By the heat radiation to the water, the temperature of water rises, and this preferably enhances the efficiency of atomization. In addition, the number of the ultrasonic vibrators and the number of the driving circuits may be freely chosen as long as the ultrasonic vibrators and driving circuits can be disposed such that the center of buoyancy agrees with the center of the disc-shaped float base plate 26. For example, one driving circuit may drive two ultrasonic vibrators. Further, the ultrasonic atomization unit includes a water level electrode rod 29 and a water level electrode ring 31 (Fig. 4, Fig. 6). As will be described later, it is detected whether water is present on the float base plate 26 or not, by monitoring the electric current between the water level electrode rod 29 and water level electrode ring 31.

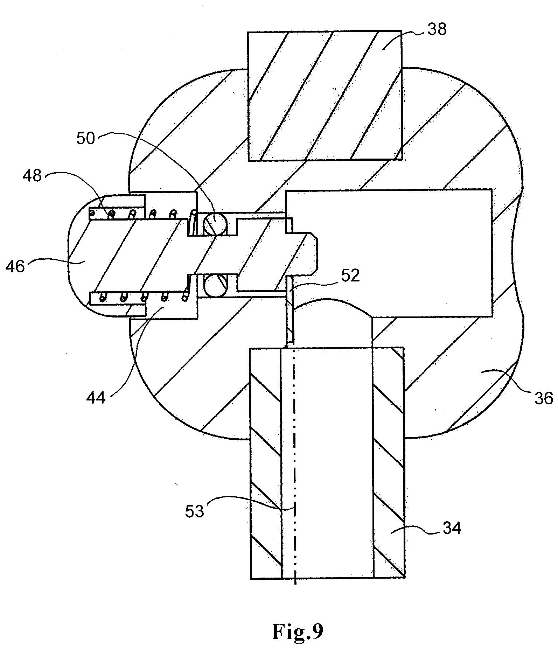

Next, the sliding contact point holders 36 will be described. The two sliding contact point holders 36 are disposed at a position where the two sliding contact point holders 36 are always above the water surface of water to be atomized. A hole 44 in a lateral direction is provided in the sliding contact point holder 36. As shown in Fig. 9, a sliding contact point 46, a coil spring 48, an O ring 50 and a terminal 52 are attached in the hole 44. The sliding contact point 46 is disposed to face outward, and is urged by the coil spring 48 in the lateral direction. However, a terminal 52 is press-fitted on the other end of the sliding contact point 46 such that the sliding contact point 46 does not fly out, and the sliding contact point 46 is movable in the hole 44 in the lateral direction. The stroke of the movement in the lateral direction is preferably 1 to 3 mm. The O ring 50 is provided for the purpose of ensuring waterproofness during cleaning. A downwardly extending portion of the terminal 52 is connected to an electric line 53, and the electric line 53 is connected to a power supply line of the driving circuit 42 of the ultrasonic atomization unit through the gap in the pipe 34 and in the float unit 18. Since the ultrasonic atomization unit is driven by DC power, the two sliding contact points 46 are connected to one of a positive line and a negative line, respectively (Figs. 9, 10, 11, 18,21).

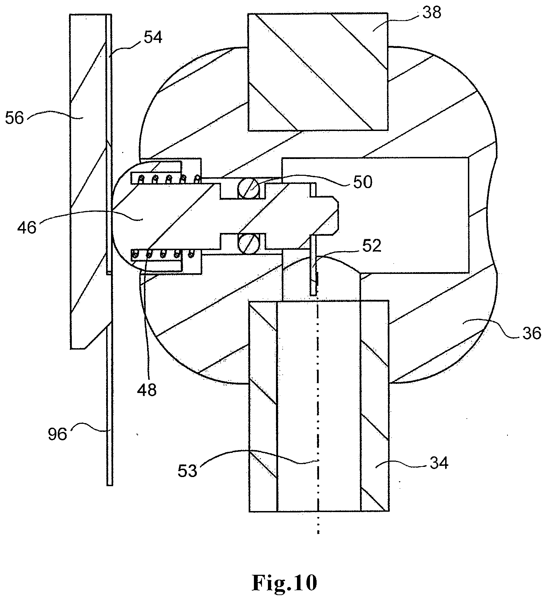

As shown in Fig. 10, the distal portion of the sliding contact point 46 is urged to an electrode A 54 provided in the inside of the upper cover 22, and is constantly put in contact with the electrode A 54, as will be described later in detail. Specifically, although the float unit 18 vertically moves in accordance with the variation of the water level, even if the float unit 18 vertically moves, the sliding contact point 46 slides on the electrode A 54 and, as a result, is put in contact with the electrode A 54. The electrode A 54, too, is disposed to be always above the water surface. The electrode A 54 is attached to an electrode hold plate 56. In this manner, the electrode A 54 is disposed outside the float unit 18 and connected to the power supply (not shown), and power from the power supply is supplied to the driving circuit 42 and, in turn, to the ultrasonic vibrator 28, via the electrode A 54 and sliding contact point 46. The electrode A 54, electrode hold plate 56 and an electrode C 96 to be described later constitute the above-described electrode unit 20 (Figs. 1, 20).

The electrode hold plate 56 is attached to the upper cover 22 with a gap 59 provided above. The electrode A 54 extends to the lateral side via the gap 59, and then extends downward to the lower end along the lateral inner side of the upper cover 22 (Figs. 1, 11, 12). As will be described later, the electrode hold plate 56 and the gap 59 of the upper cover 22 are important from the functional aspect. Since air flows in through this gap, mist occurring below does not adhere to the electrode A 54 and sliding contact point 46, and the electrode A 54 and sliding contact point 46 are always kept in a dry state.

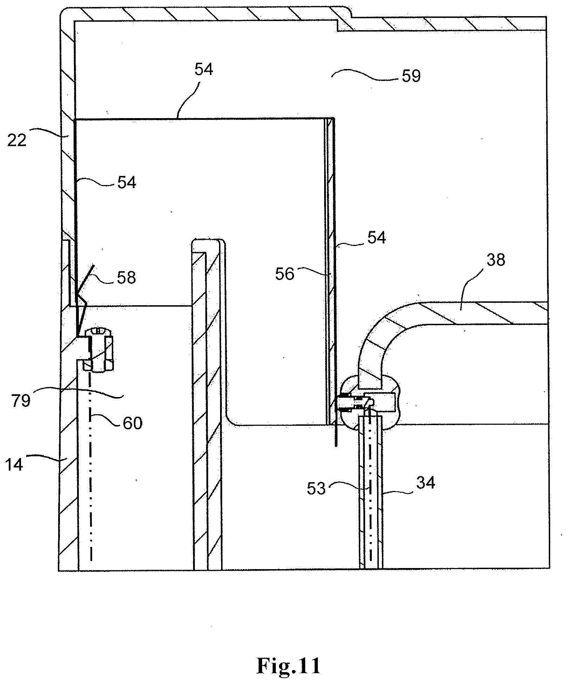

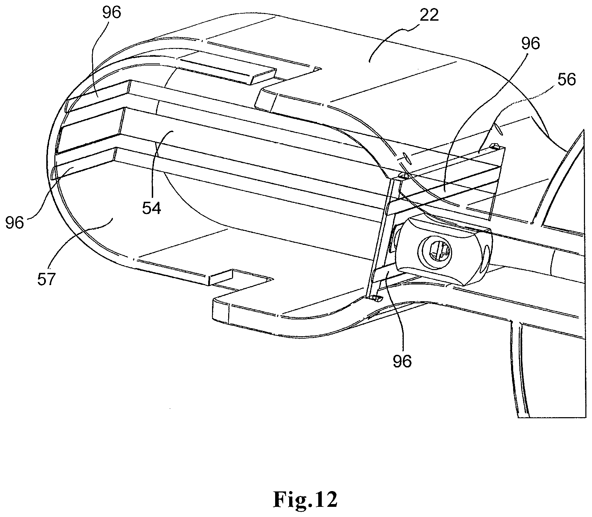

The lateral lower side of the upper cover 22 has a hollow vault shape and forms a vault-shaped passage 57 (Fig. 12), and is engaged with an upper end of the support column case 14 which has the same shape and is slightly larger (Figs. 1, 13, 17). A plate spring 58 is provided on the lateral inner side of the upper end of the support column case 14. When the upper cover 22 is engaged with the support column case 14, the plate spring 58 comes in pressure contact with the electrode A 54 of the upper cover 22 (Figs. 11, 12, 13, 14). The plate spring 58 is connected to an electric line 60. The electric line 60 is connected to an electronic circuit board 80 on the lower side of the switch 24 in the base plate unit 12 through a vault-shaped passage 79 of the support column case 14 (Figs. 11, 13, 18), and is further connected to the power supply (not shown). Accordingly, power from the power supply is supplied to the driving circuit 42 and, in turn, to the ultrasonic vibrator 28, via the electronic circuit board 80, electric line 60, plate spring 58, electrode A 54, sliding contact point 46, terminal 52, and electric line 53.

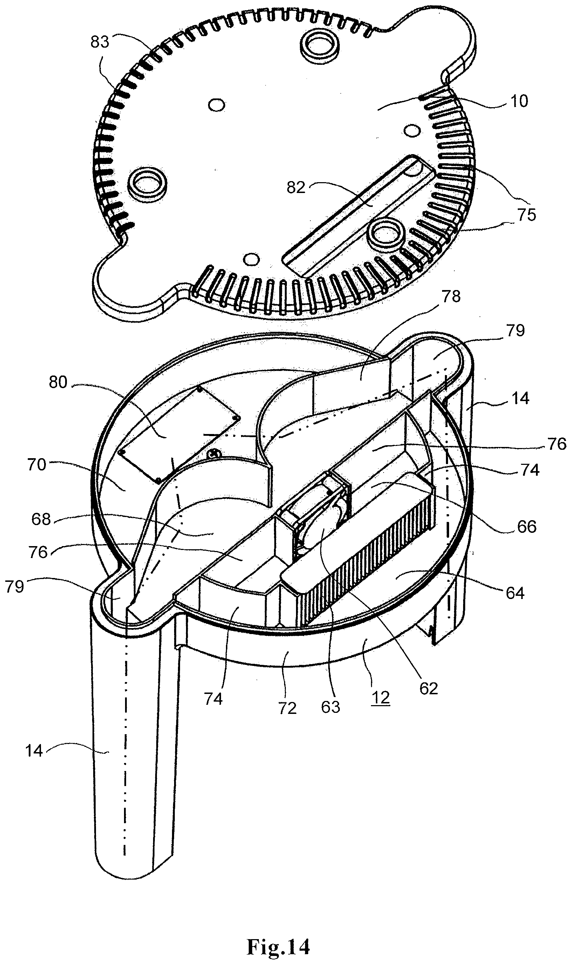

The base plate unit 12 includes therein a fan 62 (Fig. 1) and a filter 63, and includes, on the outer upper surface thereof, the switch 24 and three display lamps (a water supply lamp 65, a germ alarm lamp 67 and a water level alarm lamp 69 (to be described later)) (Figs. 1, 2, 14). The base plate unit 12 is engaged with the bottom cover 10 (Figs. 1, 14).

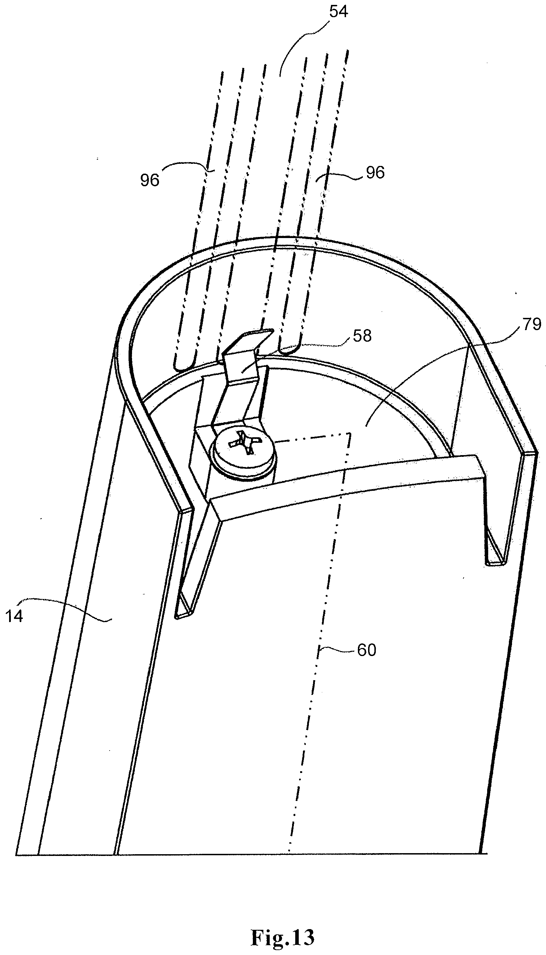

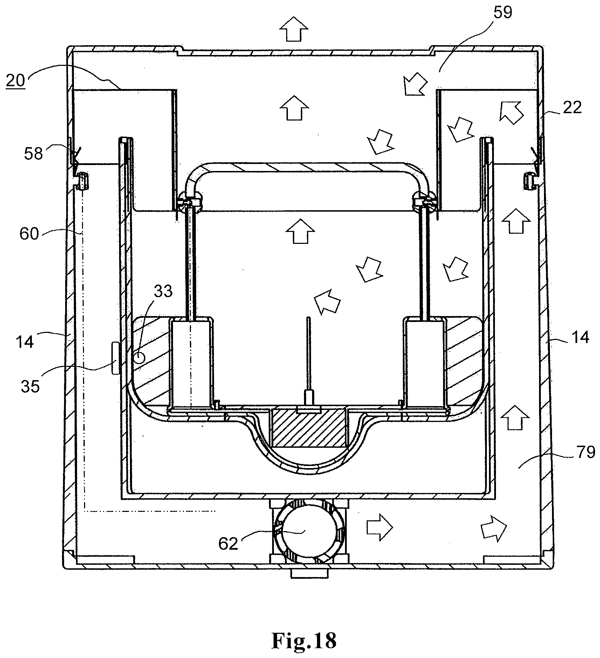

The inside of the base plate unit 12 is partitioned into a first chamber 64, a second chamber 66, a third chamber 68 and a fourth chamber 70, in the order from the rear side (Fig. 14). The first chamber 64 is a space surrounded by the upper surface of the base plate unit 12, an outer edge rib 72, a pair of ribs A 74, the filter 63, and the bottom cover 10 having a plurality of inlet ports 75. The second chamber 66 is a space surrounded by the upper surface of the base plate unit 12, the pair of ribs A 74, the filter 63, a pair of ribs B 76, the fan 62 and the bottom cover 10. The third chamber 68 is a space surrounded by the upper surface of the base plate unit 12, the pair of ribs B 76, the fan 62, a rib C 78, and the bottom cover 10, and both lateral portions of the third chamber 68 communicate with vault-shaped passages 79 in the support column cases 14, respectively. The vault-shaped passages 79 shown in Fig. 14 communicate with the vault-shaped passages 79 of the upper end portions of the support column cases 14 shown in Fig. 13, and air flows smoothly (Fig. 18). The fourth chamber 70 is a space surrounded by the upper surface of the base plate unit 12, the outer edge rib 72, rib C 78, and bottom cover 10, and the electronic circuit board 80 is provided under the switch 24. Although the bottom cover 10 has a plurality of recess portions 83, air does not pass through the recess portions 83 since the recess portions 83 are not through-holes.

The filter 63 is located between the first chamber 64 and second chamber 66, and is attachable/detachable from a filter attachment/detachment hole 82 which is a rectangular opening in the bottom cover 10. The fan 62 is driven by DC power. Although a power supply line is not shown, the power supply line is connected to the electronic circuit board 80.

The humidifier of the present embodiment uses DC as power of the power supply. Household AC power is converted to DC power by an AC converter (so-called "power adapter") (not shown), and the DC power is supplied to the electronic circuit board 80. Specifically, AC electricity, which is supplied to the AC converter from an AC power plug socket via a power plug, is converted to DC electricity in the converter, and the DC electricity is supplied to the humidifier via the power plug. In cases where the electronic circuit board 80 is equipped with an additional function of a power supply board which converts AC electricity to DC electricity, this enables direct driving with AC.

Next, the relationship between the dimensions of respective parts and the water level will be described. Since the ultrasonic atomization unit is located underwater, the humidifier can be made compact if the contact points for delivering electricity are also located underwater in the vicinity. However, if electrical contact points of an anode and a cathode are located underwater, metals in water, such as calcium and magnesium, are precipitated on the cathode due to a potential difference, and electrical conduction is disabled. In addition, if different kinds of metals or alloys are used for the contact points, a metal with a higher ionization tendency is oxidized and dissolved, and a metal with a lower ionization tendency is reduced and precipitated, and thus a problem arises that the contact points do not function. However, since the sliding contact point slides, it is difficult to make the sliding contact point waterproof. It is thus preferable that the sliding contact points 46 are located above the water surface. This is not true, however, if a single material of titanium, platinum or carbon is used for the sliding contact points 46 and each electrode member, and pure water including no metal is used as water.

In order to provide the contact points above the water surface, i.e. in order to prevent the contact point portions from being immersed in the water, it is necessary to set the contact point portions above the full water level of the humidifier. Thus, in the state in which the float unit is lowered to the bottom of the tank at the lowest level, the electric line is required to extend upward through a part of the float unit, and the contact point is required to be lifted above the full water level.

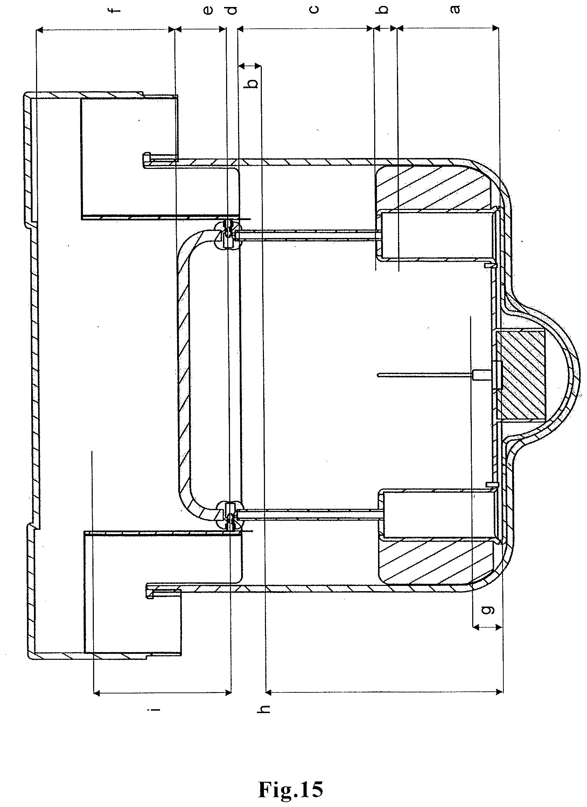

The component configurations and dimensions, which reflect these requirements, are the following a to i (Fig. 15).

A dimension a indicates a height from the surface of the ultrasonic vibrator 28 to the water surface, i.e., the optimal water level, at which the ultrasonic atomization unit can atomize water with the highest efficiency. The optimal water level varies depending on the oscillation frequency and output of the ultrasonic atomization unit, and, in general, the optimal water level is 20 to 50 mm at a frequency of 0.5 to 5 MHz. In the present invention, the float unit 18 in the floating state keeps the optimal water level. Thus, in the state in which the lower surface of the float base plate 26 is in contact with the bottom part of the tank 16 (i.e. not in the floating state), water is gradually poured in. When the water level exceeds the optimal water level, the float unit 18 begins to float. Then, the optimal water level is kept up to the full water level. The water level in the Figure indicates a lower limit of the optimal water level in the tank.

A dimension b indicates the height of the float member 30 above the water surface, in the state in which the float unit 18 floats. The humidifier can be made compact if the height b is as small as possible. Preferably, the height b is 0 to 30 mm.

A dimension c indicates the distance between the upper end surface of the float member 30 and the lower end surface of the upper cover 22, i.e. the movable distance of the float unit 18. The distance c is substantially identical to the length of the pipe 34. With the rising of the water level by pouring of water, the upper end surface of the float member 30 rises. Eventually, the upper end surface of the float member 30 abuts on the lower end surface of the upper cover 22, and does not rise any more. If the pouring of water is not stopped at this time point, the water level exceeds the optimal water level. If water is further poured in, the electrodes are immersed in water, and calcium and magnesium precipitate on the electrodes, leading to defective electrical conduction or elution of the electrodes depending on the material of the electrodes.

A dimension d indicates the distance between the center of the sliding contact point 46 and the lower end surface of the upper cover 22. Since the electrode plate is provided on the electrode hold plate 56 in the upper cover 22, a space of 1 to 10 mm is provided (Figs. 11, 12, 15).

A dimension e indicates the distance between the center of the sliding contact point 46 and the upper end surface of the bar 38. A height of 0 to 30 mm is desired, taking into account the operability when holding the float unit 18 or the guiding function when attaching the upper cover 22.

A dimension f indicates the distance between the upper end surface of the bar 38 and the inner-side upper end surface of the upper cover 22. Since the bar 38 rises in accordance with the rising of the float unit 18, it is preferable that the dimension f be set to be equal to the dimension c.

A dimension g indicates a water level at which the ultrasonic atomization unit automatically stops due to the lowering of the water level, i.e. the lowest water level. The ultrasonic atomization unit includes the water level electrode rod 29 and water level electrode ring 31 (Fig. 4, Fig. 6) and detects the current value therebetween. When the distal end of the water level electrode rod 29 projects from the water surface to the air, the resistance value becomes extremely higher than in the water, and the current value becomes zero. Upon detecting this change of the current value, the ultrasonic atomization unit automatically stops. A control circuit for the automatic stop is assembled in the driving circuit 42. The water level electrode rod 29 and water level electrode ring 31 are made needless by providing a magnet 33 on the outer edge of the float base plate 26 and by providing a reed switch 35 in the support column case 14 such that the reed switch 35 operates at the position of the magnet 33 (Fig. 18). Since the water level electrode rod 29 and water level electrode ring 31 utilize a potential difference, calcium and magnesium adhere to the cathode side. If the magnet 33 and reed switch 35 are used, adhesion of calcium or magnesium does not occur. Although the dimension a in Fig. 15 indicates the lower limit of the optimal water level in the tank, the water level further decreases to the lowest water level during actual driving. If the water level lowers below the optimal water level, the efficiency of atomization decreases.

A dimension h indicates a water level when the float rises to a highest level, i.e., h indicates the full water level. The dimension h is a + b + c -b. As described in connection with the dimension c, if water is poured in up to a level exceeding the full water level, problems arise that the optimal water level is exceeded, the electrodes are immersed, etc.

A dimension i indicates the distance of movement of the sliding contact point 46. The distance i is equal to the distance c.

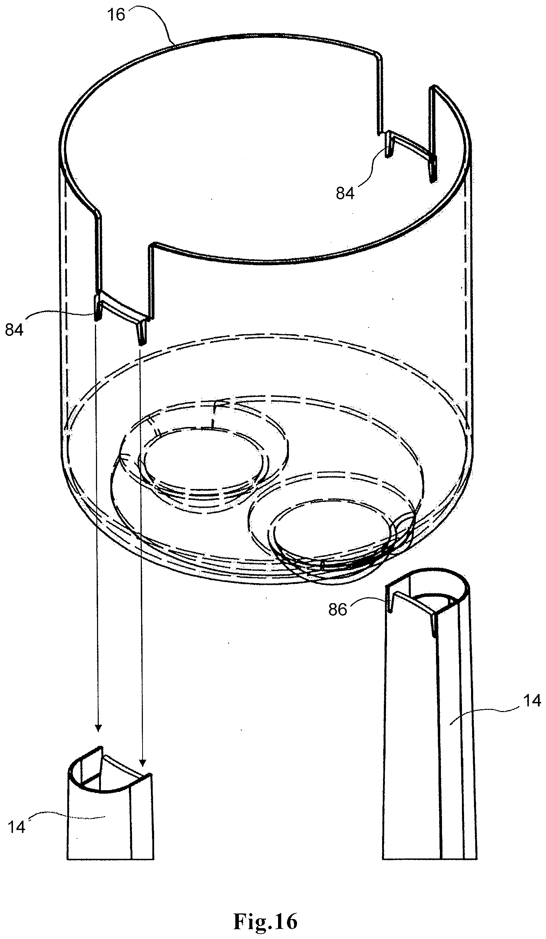

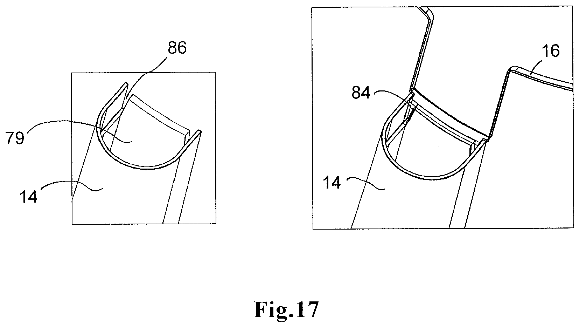

In operation, to begin with, the tank 16 and float unit 18 are cleanly washed. U-shaped ribs 84 are provided in both side surfaces of the tank 16, and are configured to be engaged with U-shaped gaps 86 provided in the inner sides of the upper ends of the support column cases 14. The tank 16 is set in the U-shaped gaps 86 (Figs. 16, 17). The left part of Fig. 17 is an enlarged view of the upper end portion of the support column case 14, and the right part of Fig. 17 is an enlarged view showing the state in which the upper end portion of the support column case 14 is engaged with the tank 16. The bottom part of the tank 16 is provided with two recess portions (as viewed from the inside of the tank) which are arranged in the front-and-rear direction. The float unit 18 is set such that the hollow convex portions 40 provided on the lower surface side of the float base plate 26 are fitted in the two recess portions (Figs. 1, 2, 3, 5 and 16).

The upper cover 22 is set such that the vault-shaped passages 57 on both lateral sides are engaged with the vault-shaped passages 79 at the upper ends of the support column cases 14, and such that a central, substantially rectangular hole 88 (Fig. 19) surrounds the bar 38 above the float unit 18 (Figs. 1, 2, 3, 12, 15, 19). A horizontal, substantially disc-shaped collar 90 is coupled to the lower end portion of the substantially rectangular hole 88. In Fig. 19, a two-dot-and-dash line 92 indicates the outside diameter of the float base plate 26, and a two-dot-and-dash line 94 indicates the inside diameter of the tank 16. In addition, intersections of dot-and-dash lines indicate the centers of the ultrasonic vibrators 28. Since water is splashed above and mist occurs from the water surface immediately above the ultrasonic vibrators 28, it is preferable that a distance of about 100 mm be provided between the water surface immediately above the ultrasonic vibrators 28 and the lower surface of the collar 90.

Water is poured in from the upper side of the tank 16 until the water level reaches the full water level. In the shown embodiment, the full water level is not indicated, but the full water level is indicated in actual products. A state is set that DC power is supplied to the humidifier (electronic circuit board 80). In this state, when the switch 24 is pressed, DC power is supplied from the electronic circuit board 80 to the fan 62 and the ultrasonic atomization unit. DC electricity is supplied from the electronic circuit board 80 to the fan 62 via a positive electric line and a negative electric line which are directly connected between the electronic circuit board 80 and the fan 62 (not shown). DC electricity is supplied from the electronic circuit board 80 to the ultrasonic atomization unit through a path constituted by, in the named order, the electronic circuit board 80, the electric line in the base plate unit 12, the electric line 60 in the support column case 14, the plate spring 58, the electrode A 54 in the upper cover 22, the electrode A 54 on the electrode hold plate 56, the sliding contact point 46, the terminal 52, the electric line 53 in the pipe 34, and the electric line in the float unit 18. It is preferable that the voltage of the DC electricity be 45 V or less. The positive line and the negative line are wired separately through the respective lateral-side passages (Figs. 1, 9, 10, 11, 12, 13, 14, 18). However, depending on the design (e.g. when one of the support column cases is so thin for the wiring, or when one of the support column cases is not provided), there may be a case in which the positive line and negative line have to be wired in one support column case. In Fig. 13 and Fig. 14, although the electric line 60 may appear to extend on the outside of the vault-shaped passage 79, the electric line 60, actually, passes through the inside of the passage 79.

When DC power is supplied to the fan 62, the fan 62 is driven, and air in the second chamber 66 is sucked by the fan 62 and blown out into the third chamber 68. As a result, the air around the humidifier is sucked from the inlet ports 75 in the bottom cover 10, and is fed successively to the first chamber 64, filter 63, second chamber 66, fan 62, third chamber 68, vault-shaped passage 79, and the lateral-side passage of the upper cover 22. Further, a part of the air makes a U-turn downward and is blown into the lateral side of the tank 16. The other part of the air is diverted into the gap 59 above the electrode hold plate 56 at the upper side of the upper cover 22, and is blown into the tank 16 from the substantially rectangular hole 88 at the central part of the upper cover (Figs. 11, 12, 14, 18, 19). As a result, since the air flows in the surrounding of the electrodes A 54 and sliding contact points 46, mist from below cannot enter the substantially rectangular hole 88 of the central part of the cover, and the electrodes A 54 and sliding contact points 46 can constantly exhibit their functions in the dry state.

At the same time, since DC power is supplied to the ultrasonic atomization unit, the ultrasonic atomization unit is driven and mist is generated from the water surface. Although not only mist but also water drops are spattered upward, the water drops are blocked by the collar 90 (Figs. 1, 2, 19) of the upper cover 22 located immediately above, and do not come out of the tank 16.

It is preferable that the distance between the outer edge of the collar 90 and the inner wall of the tank 16 be 0.1 to 50 mm. The size of the gap varies depending on the air quantity of the fan and the capability of the ultrasonic atomization unit. When the capability of the ultrasonic atomization unit is high, the gap becomes large since mist has to be blown upward with the large air quantity. An opening may be formed in the collar 90, with substantially no gap being provided, and mist may be blown out from the opening. Since mist and water drops adhere to the upper and lower surfaces of the collar 90, it is preferable that the collar 90 be shaped to have a downwardly extending outer edge portion like an umbrella shape. Thereby, adhering mist and water drops do not stay, and return into the tank.

Mist is supplied from the upper part of the tank 16 into the space (e.g. a room to be humidified) outside the humidifier, by the air blown in from above, and the mist is vaporized into water vapor, and thus the room is humidified. The above-described flow of air is indicated by open arrows in Fig. 18. In Fig. 18, the flow of air on the right side alone is shown, but the same applies to the left side. However, depending on the design (e.g. when one of the support column cases is extremely small, or when one of the support column cases is not provided), or depending on the air quantity (e.g. when a sufficient air quantity can be obtained by only one support column case), there may be a case in which air may flow in only one support column case.

When the water level lowers with the progress of humidification and the distal end of the water level electrode rod 29 is exposed on the water surface, the driving of the ultrasonic atomization unit automatically stops, as described above. Since the current value of the electrode A 54 lowers as a result, the lowering is detected and the water supply lamp 65 flickers (Fig. 2). A control circuit, which causes the water supply lamp 65 to flicker, is assembled in the electronic circuit board 80.

Upon supplying water, the driving of the ultrasonic atomization unit is automatically resumed, and, at the same time, the current value restores to the normal value. The restoration of the current value to the normal value is detected, and the water supply lamp 65 is turned off.

If water is exposed to air and stays for a long time, various germs propagate. In order to prevent this, it is necessary to periodically clean and dry the float unit 18 and tank 16. Thus, in the state in which power is supplied from the outside, the current value of the sliding contact point 46 is detected, and if the current value of zero is not detected continuously for a freely selected time (e.g. 72 hours), it is judged that the float unit 18 and tank 16 are not detached or cleaned for a long time, and the germ alarm lamp 67 (Fig. 2) is caused to flicker, and the driving is disabled.

As described above, a problem arises if water is poured in up to a level exceeding the full water level. As a countermeasure, there is the following method. A pair of electrodes C 96 are provided on both sides of the electrode A 54. A tip end of the electrode C 96 on the electrode hold plate 56 side projects downward by 5 mm from the lower end of the electrode hold plate 56. The other tip end is electrically connected to the electronic circuit board 80 via the plate spring of the support column case 14 by the same configuration as the electrode A54 (Fig. 13). When the water level reaches the lower ends of the electrodes C 96 and both ends of the electrodes C 96 are immersed in water, the electrical resistance lowers and current flows. This current is detected and the driving is stopped, and the water level alarm lamp 69 (Fig. 2) is caused to flicker to prompt drainage of water. In Fig. 20, a pair of electrodes C 96 are provided on both sides of one electrode A 54. Alternatively, one electrode A 54 and one electrode C 96 may be disposed on each of the electrode hold plates 56 on both ends, and the left and right electrodes C 96 may be provided as one pair. In addition, the structure of Fig. 20 may be disposed on each of the left side and right side, and the precision of detection may be enhanced (Figs. 3, 10, 15, 20).

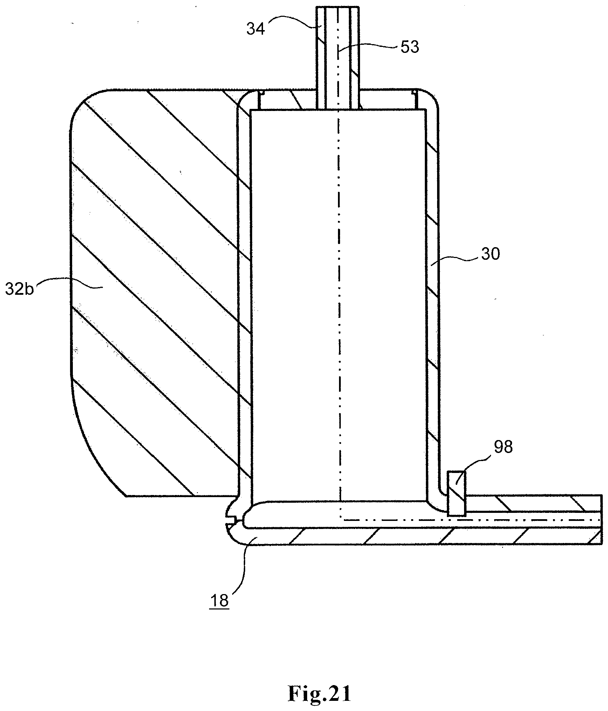

Normal tap water is used as the water for the humidifier. Thus, there is a problem of whitening, in which calcium and magnesium contained in the water are dispersed and the walls and furniture in the room are whitened. If an anode and a cathode are provided in the water and a potential difference is produced between the electrodes, calcium and magnesium are precipitated on the cathode. Accordingly, also in the present embodiment, electrodes B 98 are projected from the insides of root portions of the two float members 30 (Fig. 21 (electric lines are not shown)), and the vicinity of the cathode-side electrode B 98 is plated, or a carbon film is wound on the cathode-side electrode B 98 and float member 30. Thereby, calcium and magnesium are precipitated on the cathode-side plated portion or the carbon film, and the concentration of calcium and magnesium in the water is decreased, and the whitening can be reduced. The electrode B for reducing the whitening may not be provided at this position, but may be provided at another freely selected position.

A humidity sensor may be provided in the first chamber to monitor the humidity, and the base plate may be equipped with a function of weakening or stopping the driving of humidification when the humidity reaches a freely selected value.

In the shown embodiment, the vibrator surface has such a recessed shape that water collects in the recess. However, the most preferable is such a shape that the vibrator has no recess, and the vibrator surface is flush with the float upper surface.

Next, a second embodiment will be described. When the detailed description of the first embodiment also applies to the second embodiment, the overlapping description may be omitted in some cases in order to avoid redundancy.

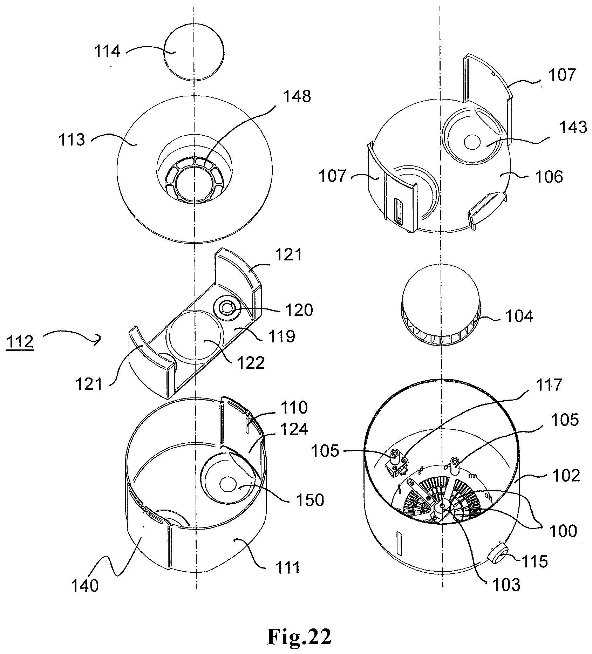

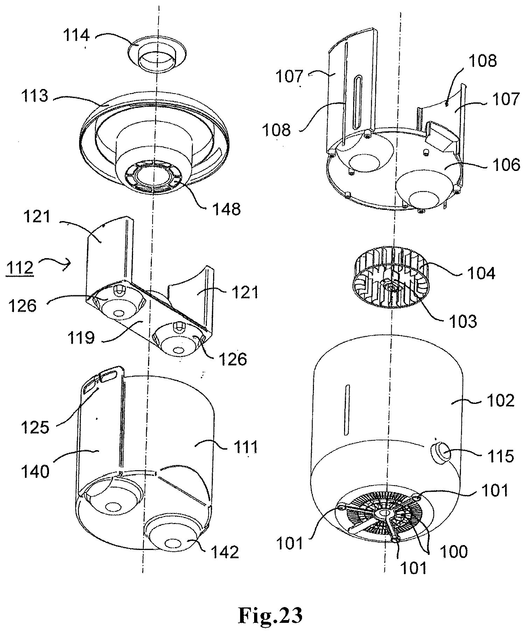

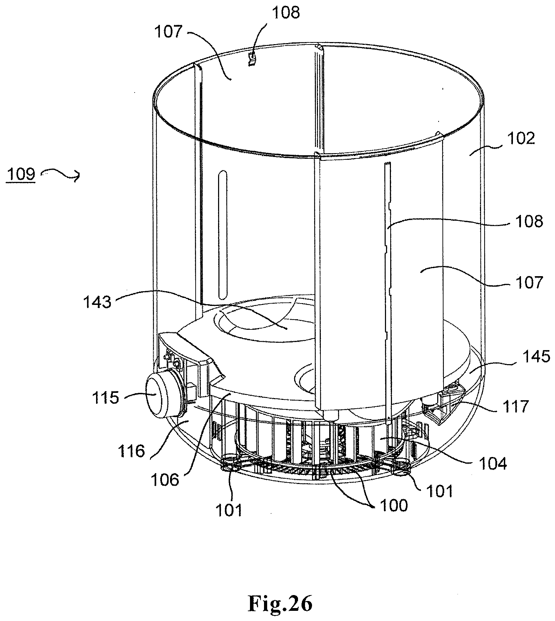

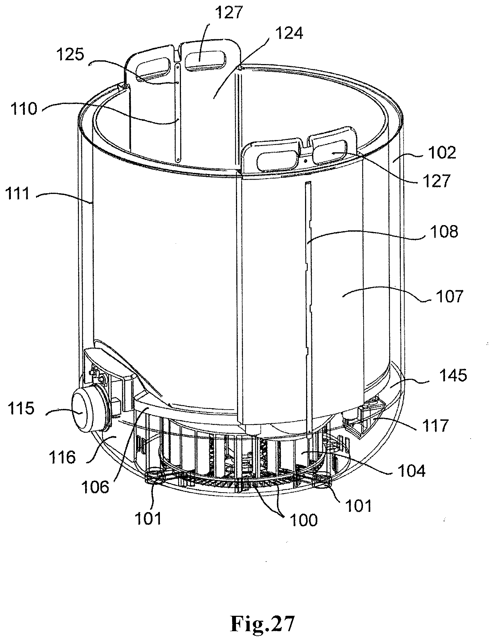

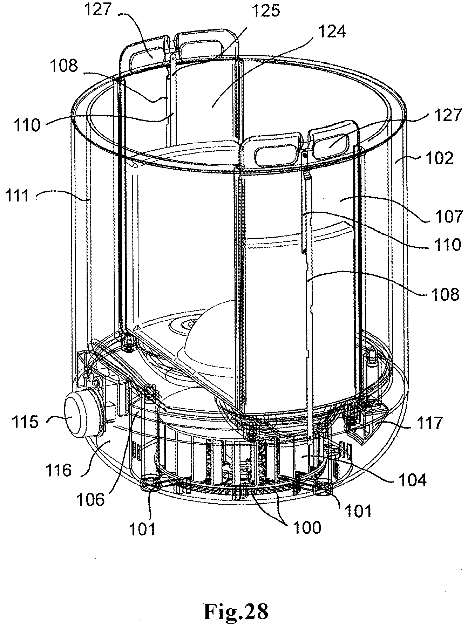

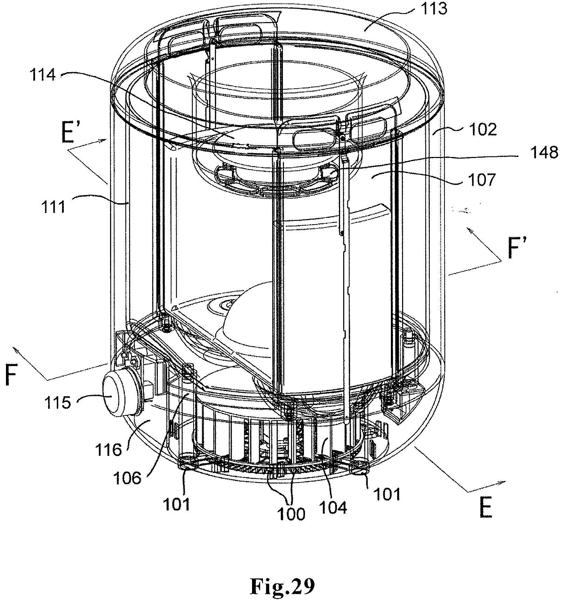

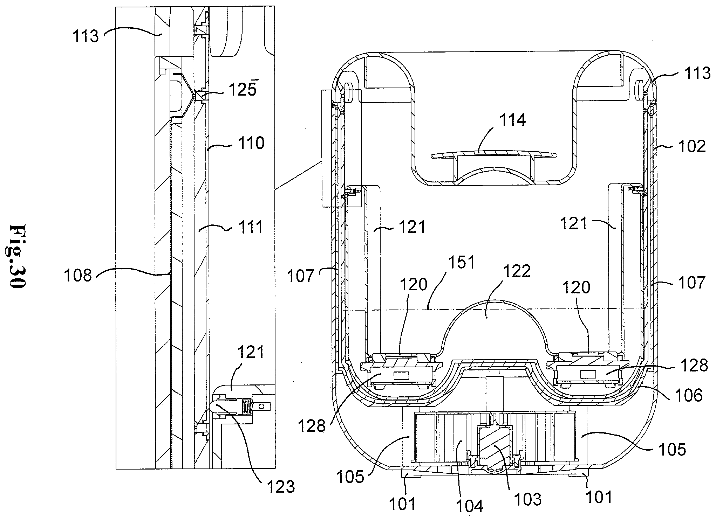

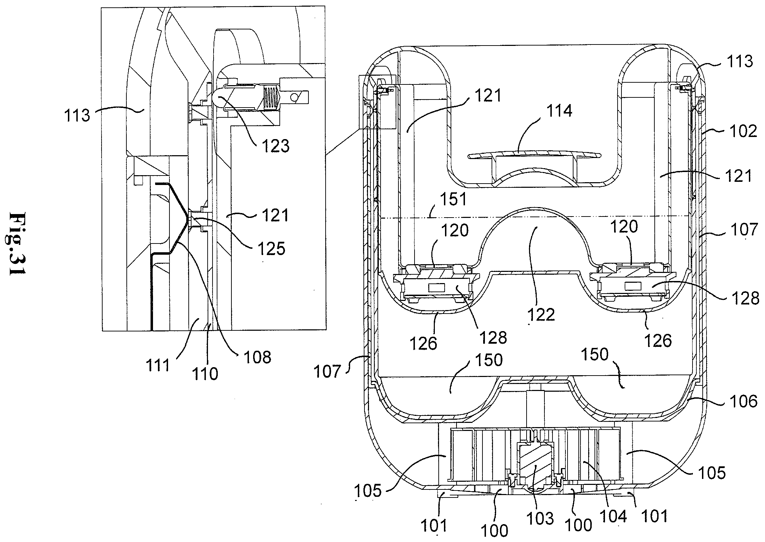

Figs. 22 and 23 are exploded perspective views of a preferable second embodiment of the ultrasonic humidifier of the present invention. Figs. 26 and 29 are perspective views of the second embodiment. As well shown in Figs. 22, 23, 26 and 29, the ultrasonic humidifier of the second embodiment includes in the order from below:
(1) a base plate unit 109 (see Fig. 26) constituted by a housing 102 having a plurality of air holes 100 in the bottom surface thereof, and having three bottom surface projection portions 101 (see Fig. 23) extending downward,
   a fan motor 103 provided on the bottom portion in the housing 102,
   a fan 104 attached to the fan motor 103,
   a switch 115 attached to the lower side of the front surface of the housing 102,
   an electronic circuit board 116 (see Figs. 26, 27) provided at a position opposed to the switch 115 with the housing 102 interposed (i.e. on the inside of the housing 102),
   a DC jack 117 provided on a symmetric side of the switch 115 (a lower part of the rear surface of the housing 102),
   a bottom plate 106 fixed to the upper ends of bosses 105 extending upward from the bottom surface of the housing 102,
   tank hold plates 107 provided on both left and right ends of the bottom plate 106 and each having a U-shaped cross section, and
   a plate spring 108 (see Figs. 30, 31) interposed and fixed between the inner wall surface of the housing 102 and the tank hold plate 107,
(2) a tank 111 placed on the bottom plate 106 of the base plate unit 109, including an electrode A 110, and containing water to be atomized,
(3) a float unit 112 configured to float on the water contained in the tank 111, and
(4) an upper cover 113 engaged with the upper end portion of the housing 102, and a collar 114 disposed in a central recess portion of the upper cover 113. Each of Fig. 22 and Fig. 23 is an exploded perspective view, and shows components of the humidifier in the order from the upper side of the humidifier, from above to below in the left column of the exploded perspective view, and then from above to below in the right column of the exploded perspective view. In Fig. 26 and Fig. 27, the housing 102 is shown in a see-through manner. In Fig. 28, the housing 102, bottom plate 106, tank hold plate 107 and tank 111 are shown in a see-through manner. In Fig. 29, the housing 102, bottom plate 106, tank hold plate 107, tank 111 and upper cover 113 are shown in a see-through manner.

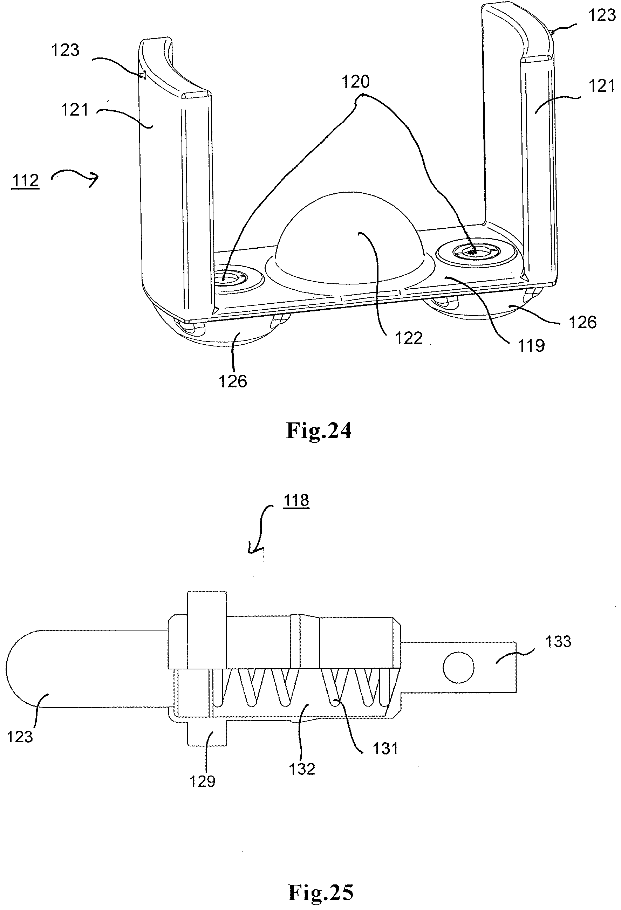

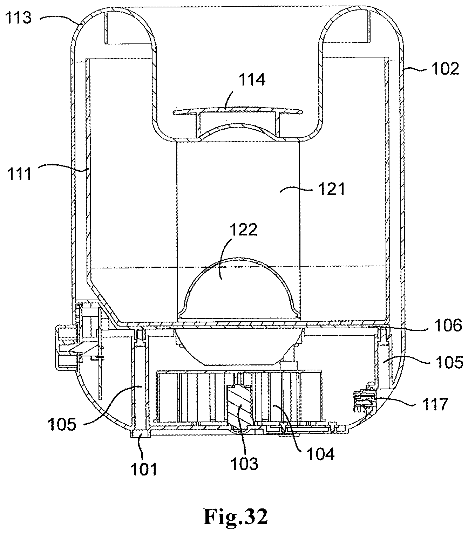

Next, the float unit 112 in the second embodiment will be described. Fig. 24 is a perspective view of the float unit 112, as viewed from an obliquely upward direction. A third part from the upper left in Fig. 23 is a perspective view of the float unit 112, as viewed from an obliquely downward direction. A cross-sectional view of the float unit 112, taken along line E-E' in Fig. 29, is shown in Fig. 30 and Fig. 31, and a cross-sectional view of the float unit 112, taken along line F-F' in Fig. 29, is shown in Fig. 32. Fig. 25 is a partial cutaway view of a sliding contact point unit 118.

The float unit 112 includes a float base plate 119 having a shape well shown in Fig. 22, which shape is one where both sides of a disc are cut off. A pair of ultrasonic vibrators 120 are disposed on the float base plate 119. The ultrasonic vibrators 120 have surfaces exposed to the water to be atomized. A pair of wall-shaped float members 121, each having an arcuate plan-view shape as viewed from above, are provided on both end portions of the float base plate 119 at mutually opposed positions with the center of the float base plate 119 interposed. In addition, a dome-shaped float member 122 is provided on the central part of the float base plate 119. As well shown in Figs. 30, 31 and 32, the wall-shaped float members 121 and dome-shaped float member 122 are hollow, and are principal members which apply buoyancy to the float unit 112. A sliding contact point 123 is provided on the outer surface of an upper part of each wall-shaped float member 121 so as to project outward.

The tank 111 has a cylindrical shape, and includes U-shaped recesses 124 provided on left and right side surfaces, into which outer edge portions of the wall-shaped float members 121 of the float unit 112 are smoothly fitted; an electrode A 110 extending in the vertical direction on an upper part of the central portion of each recess 124; a metal screw 125 which fixes the electrode A 110 to the tank 111 and has a screw head exposed to the outer surface of the tank 111; and dome-shaped recesses 150 which avoid, on the bottom surface, the hollow convex portions 126 of the float unit 112. Left and right upper ends of the tank 111 extend upward, compared to the other part thereof, and each upper end includes the electrode A 110 at the center and includes, on both sides of the electrode A 110, holes 127 serving as a handle for attaching and detaching the tank. The gap between the outer edge of each wall-shaped float member 121 and the U-shaped recess 124 on the inner wall of the tank 111 is about 0.1 mm to 2 mm, and the float unit 112 vertically moves in the tank 111 without shaking.

As shown in the third part from the upper left in Fig. 23, two dome-shaped hollow convex portions 126 in total are provided on the lower surface side of the float base plate 119. As well shown in Fig. 30 and Fig. 31, a driving circuit 128 that drives the ultrasonic vibrator 120 is accommodated in each hollow convex portion 126.

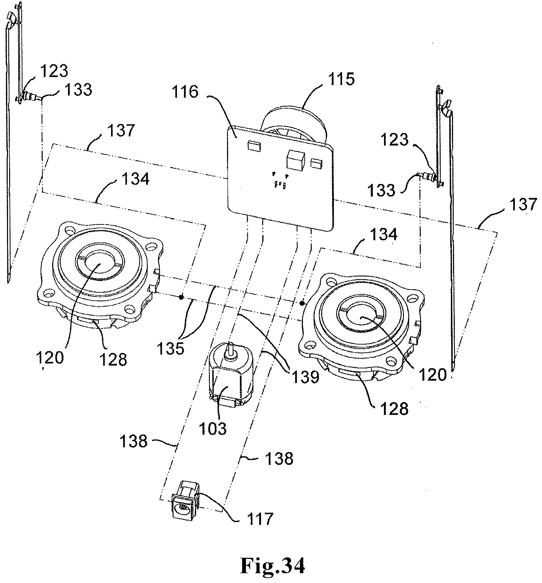

Next, the sliding contact point units 118 will be described. The two sliding contact point units 118 are disposed at a position where the two sliding contact point units 118 are always above the water surface of water to be atomized (Figs. 30, 31). As shown in Fig. 25, the sliding contact point unit 118 is constituted by a sliding contact point holder 129, the sliding contact point 123 and a coil spring 131. The sliding contact point holder 129 is provided with a lateral-directional hole 132, and the sliding contact point 123 and coil spring 131 are attached in this hole 132. The sliding contact point 123 is disposed toward the outside, and is urged by the coil spring 131 in the lateral direction. However, the outlet of the hole 132 is bent in an inner flange shape such that the sliding contact point 123 does not fly out, and the sliding contact point 123 is movable in the hole 132 in the lateral direction. A terminal 133 is provided on the opposite side to the sliding contact point 123 of the sliding contact point holder 129, and is connected to an electric line A 134 (see Fig. 34). In addition, the sliding contact point 123 and the terminal 133 are electrically connected. The electric line A 134 is connected to a power supply line A 135 of the driving circuit 128 of the ultrasonic atomization unit through the gap in the float unit 112. Since the ultrasonic atomization unit is driven by DC power, the two sliding contact points 123 are connected to one of a positive line and a negative line, respectively (Fig. 34).

The electrical connection between the parts of the second embodiment is shown by two-dot-and-dash lines in Fig. 34, and is not shown in the other Figures. In Fig. 34, electrical connections between the two-dot-and-dash lines are indicated by black-circle portions, and electrical conduction is not established even if two-dot-and-dash lines simply intersect. In addition, the respective parts are connected with shortest distances, unlike the actual arrangement of wiring lines.

As shown in Fig. 30 and Fig. 31, a distal portion of the sliding contact point 123 is urged to the electrode A 110 provided on the inside of the tank 111, and is always in contact with the electrode A 110. Specifically, the float unit 112 vertically moves in accordance with the variation of a water level 151 indicated by a two-dot-and-dash line in the Figures. However, even when the float unit 112 vertically moves, the sliding contact point 123 slides on the electrode A 110, and, as a result, the sliding contact point 123 is always kept in contact with the electrode A 110. The electrode A 110 is also disposed to be always above the water surface. In this manner, the electrode A 110 is disposed outside the float unit 112 and connected to the power supply (not shown), and power from the power supply is supplied to the driving circuit 128 and, in turn, to the ultrasonic vibrator 120, via the electrode A 110 and sliding contact point 123.

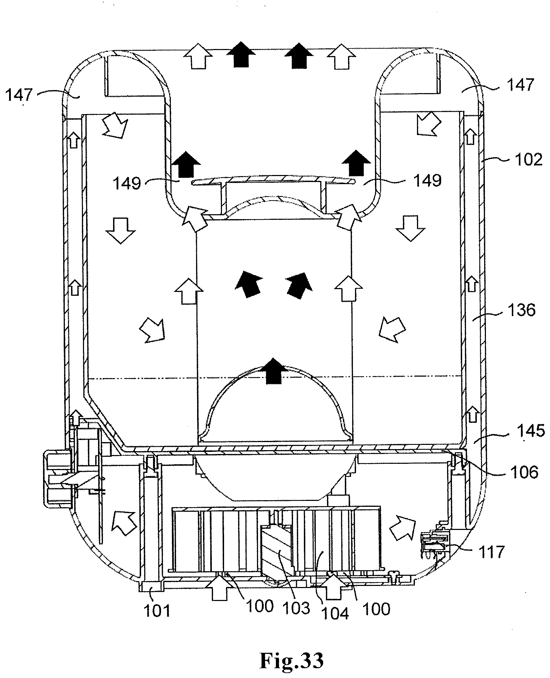

In the second embodiment, the tank 111 is provided in the inside of the housing 102. The gap between the housing 102 and tank 111 is a passage 136 having an annular cross section (see Fig. 33) (although the parts of the tank hold plates 107 are blocked). The passage 136 corresponds to the vault-shaped passage 79 of the first embodiment. The plate spring 108 is provided on the lateral inner side of the upper end of the housing 102. When the tank 111 is fitted in, the plate spring 108 comes in pressure contact with the head of the metal screw 125 which fixes the electrode A 110 of the tank 111 (Figs. 30, 31). The plate spring 108 is connected to the power supply (not shown) via an electric line B 137 to the electronic circuit board 116 and DC jack 117 in the named order. Accordingly, power from the power supply is supplied to the driving circuit 128 and, in turn, to the ultrasonic vibrator 120, via the DC jack 117, electric line C 138, electronic circuit board 116, electric line B 137, plate spring 108, metal screw 125, electrode A 110, sliding contact point 123, terminal 133, and electric line A 134.

The fan motor 103 is driven by DC power. A power supply line B 139 is connected to the electronic circuit board 116 (Fig. 34).

In operation, the tank 111 is set in the base plate unit 109 (Fig. 26). Left and right convex portions 140 of the tank 111 are fitted in the tank hold plates 107 each having a U-shaped cross section, and convex portions 142 on the bottom portion of the tank 111 are fitted in recess portions 143 of the bottom plate 106 (Figs. 22, 23, 26, 27). Fig. 26 shows the base plate unit 109 before the tank 111 is set, and Fig. 27 shows the base plate unit 109 after the tank 111 is set. In each of Fig. 26 and Fig. 27, the housing 102 is shown in a see-through manner.

Next, the float unit 112 is set in the tank 111 which is in the state of Fig. 27. The outer edges of the wall-shaped float members 121 are slid in the U-shaped recesses 124 of the tank 111 to set the float unit 112 on the bottom surface of the tank 111. The set state is shown in Fig. 28. The housing 102, bottom plate 106, tank hold plate 107 and tank 111 are shown in a see-through manner.

Subsequently, the upper cover 113 and collar 114 are successively set on the upper end of the base plate unit 109 (Fig. 29).

Immediately before driving, water is poured in from above the upper cover 113 until the water level reaches the full water level. A state is set that DC power is supplied to the humidifier (electronic circuit board 116). In this state, if the switch 115 is turned on, DC power is supplied from the electronic circuit board 116 to the fan motor 103 and driving circuits 128.

When DC power is supplied to the fan motor 103, the fan motor 103 is driven to rotate the fan 104 which is connected to the motor bearing. Outside air is sucked into the inside of the fan 104 from the air holes 100 of the bottom part of the housing 102, and is fed to the outside of the fan 104. Further, the air flows through the gap 145 (see Fig. 26, 27) between the housing 102 and bottom plate 106, the annular passage 136 between the housing 102 and tank 111, and an inner-side outer edge 147 (see Fig. 33) of the upper cover 113, and is blown into the tank 111.

At the same time, since DC power is supplied to the driving circuits 128, the ultrasonic vibrators 120 are driven and mist is generated from the water surface. Although not only mist but also water drops are spattered upward, the water drops are blocked by the upper cover 113 and collar 114, which are located above, and do not come out of the tank 111 and the humidifier.

Mist is supplied into the space (e.g. a room to be humidified) outside the humidifier by the air blown in from above, through the upper part of the tank 111, an opening 148 of the upper cover 113 and a gap 149 (see Fig. 33) between the upper cover 113 and the outer edge of the collar 114. The mist is vaporized into water vapor, and thus the room is humidified. In Fig. 33, the above-described flow of air is indicated by open arrows, and the flow of mist is indicated by black arrows.

In cleaning, the two holes 127 as a handle of the tank 111 are held and lifted by fingers, and the tank 111 and the float unit 112 held in the tank 111 are taken out of the base plate unit 109. Further, the float unit 112 is taken out by holding the dome-shaped float member 122 of the float unit 112 by fingers. In this state, the tank 111 and float unit 112 are washed in water.

In the second embodiment, like the first embodiment, two electrodes B may be provided on the float base plate 119 or other parts, and calcium and magnesium in tap water may be precipitated to decrease the concentration of the calcium and magnesium.

In addition, in the second embodiment, like the first embodiment, a humidity sensor may be provided on the bottom part of the base plate unit 109 or other parts, and there may be provided a function of monitoring humidity, and weakening or stopping the driving of humidification when the humidity reaches a freely selected value.

Besides, in the second embodiment, like the first embodiment, there may be provided a pair of electrodes C disposed at a position lower than the lower end portions of the electrodes A, means for measuring a current value of current flowing between the paired electrodes C, and means for stopping the driving and turning on an alarm lamp when the measured current value is a prescribed value or more. Reference Signs List

10...Bottom cover
12...Base plate unit
14...Housing
16...Tank
18...Float unit
20...Electrode unit
22...Upper cover
24... Switch
26...Float base plate
28...Ultrasonic vibrator
29...Water level electrode rod
30...Float member
31...Water level electrode ring
32a...Shake-preventing plate
32b...Shake-preventing plate
33...Magnet
34...Pipe
35...Reed switch
36...Sliding contact point holder
38...Bar
40...Hollow convex portion
42...Driving circuit
44...Hole
46...Sliding contact point
48...Coil spring
50...0 ring
52...Terminal
53...Electric line
54...Electrode A
56...Electrode hold plate
57...Vault-shaped passage
58...Plate spring
59...Gap between the electrode hold plate and upper cover
60...Electric line
62...Fan
63...Filter
64...First chamber
65...Water supply lamp
66...Second chamber
67...Germ alarm lamp
68...Third chamber
69...Water level alarm lamp
70...Fourth chamber
72...Outer edge rib
74...Rib A
75...Inlet port
76...Rib B
78...Rib C
79...Vault-shaped passage
80...Electronic circuit board
82...Filter attachment/detachment hole
83...Recess portion
84...U-shaped rib
86...U-shaped gap
88...Substantially rectangular hole
90...Collar
92...Two-dot-and-dash line indicating the outside diameter of the float base plate
94...Two-dot-and-dash line indicating the inside diameter of the tank
96...Electrode C
98...Electrode B
100...A plurality of air holes
101...Bottom surface projection portion
102...Housing
103...Fan motor
104...Fan
105...Boss
106...Bottom plate
107...Tank hold plate
108...Plate spring
109...Base plate unit
110...Electrode A
111...Tank
112...Float unit
113...Upper cover
114...Collar
115...Switch
116...Electronic circuit board
117...DC jack
118...Sliding contact point unit
119...Float base plate
120...Ultrasonic vibrator
121...Wall-shaped float member
122...Dome-shaped float member
123...Sliding contact point
124...U-shaped recess
125...Metal screw
126...Hollow projection portion
127...Hole
128...Driving circuit
129...Sliding contact point holder
131...Coil spring
132...Hole
133...Terminal
134...Electric line A
135...Power supply line A
136...Annular passage
137...Electric line B
138...Electric line C
139...Power supply line B
140...Convex portion
142...Convex portion
143...Recess portion
145...Gap
147...Inner-side outer edge
148...Opening
149...Gap
150...Dome-shaped recess
151... Water level

## Claims

1. An ultrasonic humidifier comprising:
a tank configured to contain water to be atomized;
a float unit configured to float on said water contained in said tank;
an ultrasonic vibrator disposed in said float unit; and
power supply means for supplying power to said ultrasonic vibrator,
wherein said power supply means comprises:
a pair of sliding contact points disposed in said float unit and configured to be always located above the water surface of said water; and
a pair of electrodes A configured to be always put in sliding contact with said pair of sliding contact points, and configured to be always located above said water surface of said water, and
each of said electrodes A is disposed outside said float unit and connected to a power supply, and power from said power supply is supplied to said ultrasonic vibrator via said electrodes A and said sliding contact points.

2. The humidifier of Claim 1, wherein said float unit comprises a float base plate, said float base plate comprises on the upper surface thereof a convex-shaped float member configured to apply buoyancy, and the surface of said ultrasonic vibrator is exposed to said water on the upper surface side of said float base plate.

3. The humidifier of Claim 2, further comprising a driving circuit provided on the lower surface side of said float base plate and configured to drive said ultrasonic vibrator.

4. The humidifier of Claim 2 or 3, further comprising a pair of upwardly projecting pipes provided on the peripheral edge portion of the upper surface of said float base plate,
wherein each of said sliding contact points is disposed on each of said pipes in a manner to face outward.

5. The humidifier of any one of Claims 1 to 4, further comprising:
a base plate unit on which said tank is placed;
one or more support column cases provided on the peripheral edge portion of said base plate unit, extend upward and are configured to hold said tank; and
an upper cover attached to each of upper end portions of said support column cases, and located in upper opening portion of said tank.

6. The humidifier of Claim 5, wherein said electrodes A are disposed on said upper cover.

7. The humidifier of Claim 5 or 6, wherein said upper cover is disposed above said water surface of said water, and comprises a collar configured to cover a most part of said water surface of said water.

8. The humidifier of any one of Claims 5 to 7, wherein said base plate unit incorporates a fan, and the air flow produced by rotating said fan, passes through said support column case and said upper cover, and then reaches the space above said water surface of said water in said tank.

9. The humidifier of any one of Claims 1 to 3, further comprising a pair of upwardly projecting wall-shaped float members provided on the peripheral edge portion of the upper surface of said float base plate,
wherein each of said sliding contact points is disposed on each of said wall-shaped float members in a manner to face outward, and each of said electrodes A is provided on the inner surface of said tank.

10. The humidifier of Claim 9, further comprising a housing configured to accommodate said tank, and an upper cover located in upper opening portion of said tank.

11. The humidifier of Claim 10, wherein said upper cover is disposed above said water surface of said water, and comprises a collar configured to cover a most part of said water surface of said water.

12. The humidifier of Claim 10 or 11, wherein said housing incorporates a fan in a bottom part of said housing, and the air flow produced by rotating said fan passes through the space between the inner surface of said housing and the outer surface of said tank, and then through said upper cover, and reaches the space above said water surface of said water in said tank.

13. The humidifier of any one of Claims 1 to 12, further comprising:
means for detecting the current flowing in said sliding contact points and measuring the time in which said current does not flow; and
means for stopping driving and turning on an alarm lamp when said time reaches a prescribed time.

14. The humidifier of any one of Claims 1 to 13, further comprising:
a pair of electrodes C disposed at a position lower than the lower end portions of said electrodes A;
means for measuring the current value of the current flowing between said pair of electrodes C; and
means for stopping driving and turning on an alarm lamp when said measured current value is a prescribed value or more.

15. The humidifier of any one of Claims 1 to 14, further comprising a pair of electrodes B disposed at a position where said pair of electrodes B are immersed in said water, said pair of electrodes B being composed of an anode and a cathode and configured to precipitate metal ions included in said water.
